# EUROPEAN PATENT SPECIFICATION

(11) **EP 2 665 319 B1**
(45) Date of publication and mention of the grant of the patent: **12.02.2020**
(21) Application number: 12360038.9
(22) Date of filing: 14.05.2012
(51) Int. Cl.: H04W 74/00, H04W 72/02, H04W 74/08

(54) **COMMUNICATING USER EQUIPMENT CAPABILITY TO A BASE STATION**
KOMMUNIKATION DER BENUTZERGERÄTEFÄHIGKEIT ZU EINER BASISSSTATION
COMMUNICATION DE LA CAPACITÉ D'ÉQUIPEMENT UTILISATEUR A UNE STATION DE BASE

(43) Date of publication of application: 20.11.2013
(73) Proprietor: Alcatel Lucent, 91620 Nozay (FR)
(72) Inventor: Wong, Shin Horng, Chippenham Wiltshire SN15 3YB (GB)
(74) Representative: Script IP Limited

(56) References cited:
- US-A1- 2012 250 644
- ALCATEL-LUCENT ET AL: "Layer 1 indication of UE capability and preference for Enhanced CELL_FACH", 3GPP DRAFT; R2-115868 - REL-11 FE-FACH - GROUPING OF PREAMBLE SIGNATURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 7 November 2011 (2011-11-07), XP050564161, [retrieved on 2011-11-07]
- HUAWEI ET AL: "Signature partition and sub-feature dependency in FE-FACH", 31 January 2012 (2012-01-31), 3GPP DRAFT; R2-120538 SIGNATURE PARTITION AND SUB-FEATURE DEPENDENCY IN FE-FACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050565437, [retrieved on 2012-01-31] * the whole document *

## Description

### FIELD OF THE INVENTION

The present invention relates to a method of communicating user equipment capability to a base station in a wireless communications network, and a computer program product and user equipment operable to perform that method.

### BACKGROUND

User equipment may operate in various modes in, for example, a UMTS telecommunications network. On initial turning on of user equipment in a cell, it will typically operate in an idle mode. Once it synchronises and attaches itself to a base station, user equipment gains Radio Resource Control (RRC) connection and is referred to as being in connected mode. User equipment in idle mode does not have a Radio Resource Control connection. If user equipment is RRC connected it can be in one of five different RRC states: cell_DCH, cell_FACH, enhanced cell_FACH, cell_PCH, or URA_PCH.

User equipment typically moves into a cell_DCH state when its data traffic is high. In a cell_DCH state, user equipment is allocated a dedicated channel on which to transmit and receive data from a base station. In a network operating according to typical UMTS architecture, user equipment can be in a cell_DCH state when it is expected to have a high volume of traffic. Operation in a cell_DCH state is typically highly demanding of battery power and network resource.

It will be appreciated that for data traffic which is particularly bursty in nature, operation in a full cell_DCH state can be particularly wasteful of user equipment battery and also of available radio resource. Thus, the ability to handle bursty traffic without entering a more dedicated state can be beneficial to overall network operation.

The widespread popularity of smartphones in commercial networks has led to a change in a typical data traffic profile carried within a network. The loading of Web pages and subsequent user reading, for example, has led to a data traffic profile which has become substantially discontinuous and bursty, and traditional communication link establishment techniques and transfer techniques designed primarily for continuous data transmission may not offer a particularly efficient or prompt means to handle bursty traffic.

User equipment may be operable, when not in a cell_DCH state, to use a Random Access Channel (RACH) on the uplink and a base station will operate to communicate with user equipment using a Forward Access Channel (FACH). RACH and FACH have a small data carrying ability and, in WCDMA or UMTS systems, it is possible for user equipment and base stations to operate and communicate data traffic therebetween using those shared or common resources on downlink and uplink when user equipment is operating in non-cell_DCH RACH states.

Furthermore, user equipment operating within a cell of a wireless communication network may be operable to transmit data traffic to a base station using a range of transmit time interval regimes. Shorter transmit time intervals can be used when a connection between user equipment and a base station is experiencing good radio condition and allows for particularly efficient data traffic transfer between nodes of the network. Short transmit time interval regimes may, however, not be suitable for transmissions made at the edge of a cell where a longer transmit time interval may allow user equipment to continue communicating with the network, albeit in a less efficient manner because the radio condition being experienced at a cell edge is typically less.

User equipment operable to provide various functionalities within a network, for example, the ability to transmit using a non-cell_DCH state on common channels, and the ability to switch between a range of transmit time interval regimes, offer a network various means to optimise its own operation. Aspects described herein offer methods of utilising available functionalities to allow signalling and data traffic transfer to occur efficiently within a wireless communications network.

"Layer 1 indication of UE capability and preference for Enhanced Cell_FACH" 3GPP draft; R2-115868-REL FE-FACH- Grouping of Preamble Signatures, 3GPP Mobile Competence Centre; 650, route Des Lucioles; F-06921 Sophia Antipolis, discloses how a UE indicates its capability to a nodeB using preamble signatures. It suggests different ways of indicating enhanced capabilities given that the number of preamble signatures is limited and suggests introducing a separate scrambling code for Rel-11. It also proposes allowing legacy and Rel-11 to share the same scrambling code, and suggests some preamble signatures being reserved for UEs capable of two functions with these signatures being further divided to indicate a UE's preference.

### SUMMARY

Accordingly, a first aspect provides a method according to claim 1.

The first aspect recognises that various functionality within a wireless network is being offered to user equipment and base stations operating according to a cell_FACH state. Two possible such features are: RACH fallback and 2/10 ms Transmit Time Interval concurrent deployment.

According to a RACH fallback mechanism, user equipment operating in a cell_FACH state is operable to request a common E-DCH resource. If the cell in which user equipment is operating is congested, a base station will typically be operable to indicate to the user equipment that a common E-DCH resource as requested is not available, but it may fall back to operate on a RACH channel. The base station is operable to indicate that fallback to RACH via a reserved combination of EAI value and signature on the Acquisition Indicator Channel (AICH). As a result, unsuccessful user equipment then tries to re-access the network using a Random Access Channel (RACH).

According to the 2/10 ms Transmit Time Interval (TTI) concurrent deployment functionality, user equipment operating within a network may request a 2 ms TTI common E-DCH resource. If no such resource is available, a base station receiving that request may direct that user equipment to use a 10 ms TTI common E-DCH resource.

In a WCDMA network, there are typically 32 common E-DCH resources. According to the adjustable Transmit Time Interval functionality, each common E-DCH resource is tied to or associated with a Transmit Time Interval. For example, resources with index 1 to 20 are typically configured for operation using a 10 ms TTI and the remaining resources with indexes 21 to 32 are typically configured for 2 ms TTI operation. Thus, a base station may indicate to user equipment using an EAI on the Acquisition Indicator Channel (AICH) an index of a channel for user equipment to use and thus implicitly also indicate to user equipment a Transmit Time Interval to use.

It will be appreciated that a base station may not direct user equipment which has requested a 10 ms TTI common channel to use a 2 ms TTI common channel. It is assumed that user equipment will only request a 10 ms TTI common channel if it is operating at a cell edge or is unable to support a 2 ms TTI resource.

According to both RACH fallback mechanisms and variable Transmit Time Interval mechanisms, a base station is operable to make a decision regarding the nature of resource allocated to user equipment. The Acquisition Indicator Channel (AICH) is used to indicate a base station's decision either explicitly (for example, in the case of RACH fallback) or implicitly (for example, in the case of variable Transmit Time Interval).

It will be appreciated that since this process occurs in the physical layer (that is to say, on signalling between user equipment and a base station), in order to make a sensible decision and to optimise efficient network operation, a base station needs to obtain information from the user equipment regarding which features that user equipment is able to support.

In the case of variable Transmit Time Intervals (TTI), some preamble signatures used by user equipment to access the network are reserved for user equipment which support such functionality. Furthermore, within that set of preamble signatures, some are reserved for user equipment to indicate that it would prefer a 2 ms TTI E-DCH resource, and a further set of preamble signatures is used by user equipment to indicate it wishes to access the network using a 10 ms TTI E-DCH resource.

It will also be appreciated that legacy user equipment may not have variable Transmit Time Interval functionality and may only be configured to use 10 ms Transmit Time Intervals. As a result, a cell supported by a base station is configured to use only 10 ms Transmit Time Intervals for some user equipment, and user equipment which do have variable Transmit Time Interval functionality share the set of preamble signatures allocated to 10 ms Transmit Time Intervals with those legacy user equipment that can only support operation according to that Transmit Time Interval. Thus, a base station is able to recognise user equipment capability at the physical layer as a result of a preamble signature used by user equipment.

Similarly, preamble signatures may be reserved for user equipment which can perform RACH fallback.

Where a combination of functionalities is available to user equipment, for example, user equipment which is capable of performing RACH fallback and also variable Transmit Time Interval operation, a base station may need to identify that functionality together with the Transmit Time Interval preference of user equipment having that functionality. Table 1 sets out the combination of user equipment capability and preference combinations that a base station may need to identify in order to fully interpret information from user equipment to determine user equipment functionality.

**Table 1: Combinations of Indication for UE capability and preference**

| **Combination** | **Supports RACH Fallback** | **Supports 2/10 ms TTI** | |
|---|---|---|---|
| | | **Prefers 10 ms TTI** | **Prefers 2 ms TTI** |
| 1 | No | Yes | No |
| 2 | Yes | No | No |
| 3 | No | No | Yes |
| 4 | Yes | Yes | No |
| 5 | Yes | No | Yes |

It is possible to reserve five sets of preamble signatures in order to cover the five combinations set out in Table 1. However, since are typically only 16 preamble signatures available for common channel (E-DCH) access for user equipment operating in a cell_FACH state, reserving preamble signatures reduces the number of signatures available for each group of user equipment and limiting operation to the five sets is likely to lead to an increase in collisions; that is to say, multiple user equipment using the same preamble signature to try and access a network. Aspects described herein aim to minimise collisions due to user equipment indicating its capability and preference to a base station, thereby allowing information to be gathered by a base station to improve overall efficient network operation.

The method further comprises: receiving an indication of a further function scrambling code associated with a further function of the user equipment; and if it is determined that the user equipment does not have first function capability and assessed that said user equipment does have further function capability, selecting the further function scrambling code associated with a further function of the user equipment to request resource from the base station. Accordingly, it will be understood that whilst some user equipment in a network might support both first and further function capabilities, it is possible that some may only support further function capability. In such a case, it would be inappropriate to use a scrambling code indicating to a base station that first function capability existed. However, it may still be useful to indicate to the network that a further functionality is available, rather than randomly choosing a scrambling code which indicates no particular functionality to the base station.

The method further comprises: receiving an indication of at least one operational parameter preamble signature associated with a preferred operational parameter of the further function of the user equipment;
and if the further function scrambling code is selected, determining whether the user equipment is operable to support operation according to the preferred operational parameter, and if so, selecting the at least one operational parameter preamble signature to request resource from the base station. Accordingly, if a further functionality, for example, variable transmit time interval functionality, has a set of operational preference parameters, for example, transmit time intervals, which can be chosen by user equipment, appropriate choice of preamble signature can indicate such preferences to a base station.

In one embodiment, the method further comprises: determining that user equipment does not have first function or further function capability, and preventing selection of the first function scrambling code or the further function scrambling code to request resource from the base station. Accordingly, scrambling codes and preamble signatures may be accorded a specific meaning in order to indicate user equipment functionality to a base station, so that the base station may take appropriate action to optimise performance on the basis of available functionality.

In one embodiment, the request for resource comprises a request for a common channel. Accordingly, a method according to the first aspect may be of use when there is likely to be contention for a particular type of channel and a base station can manage that contention based on user equipment functionality, as long as that information can be deduced from information received from user equipment.

In one embodiment, the request for resource occurs in the physical layer of the wireless communications network. Accordingly, there is no need to involve higher layers of the network, and a response may be made by a base station to user equipment functionality without a need to defer to higher layer signalling from an RNC or the core network.

In one embodiment, the at least one further function preamble signature associated with a further function of the user equipment comprises a first set of preamble signatures. Assignment of a set, rather than just one, preamble signature can allow contention for a particular resource within a network to be reduced.

In one embodiment, the at least one operational parameter preamble signature associated with a preferred operational parameter of the further function of the user equipment comprises a second set of preamble signatures. Assignment of a set, rather than just one, preamble signature can allow contention for a particular resource within a network to be reduced.

In one embodiment, the first and second sets of preamble signatures are the same. Arrangement of the sets to be substantially identical, or to use the same transition, can result in more efficient signalling of indicative parameters to the user equipment in a system information broadcast message.

In one embodiment, receiving the indication of a first function scrambling code and indication of at least one further function preamble signature comprises receiving a system information broadcast message comprising those indicators.

In one embodiment, the user equipment is operating in a CELL_FACH RRC state.

In one embodiment, the first function comprises RACH fallback capability.

In one embodiment, the further function comprises variable transmit time interval capability.

In one embodiment, the preferred operational parameter comprises one of a first or second preconfigured transmit time interval.

A second aspect provides a computer program product operable, when executed on a computer, to perform the method of the first aspect.

A third aspect provides user equipment according to claim 14.

The reception logic is further operable to receive an indication of a further function scrambling code associated with a further function of the user equipment; and if it is determined that the user equipment does not have first function capability and assessed that the user equipment does have further function capability, selecting the further function scrambling code associated with a further function of the user equipment to request resource from the base station.

The reception logic is further operable to receive an indication of at least one operational parameter preamble signature associated with a preferred operational parameter of the further function of the user equipment; and if the further function scrambling code is selected, determination logic is operable to determine whether the user equipment is operable to support operation according to the preferred operational parameter, and if so, the selection logic is operable to select the at least one operational parameter preamble signature to request resource from the base station.

In one embodiment, determination logic is operable to determine that user equipment does not have first function or further function capability, and selection logic is operable to prevent selection of the first function scrambling code or the further function scrambling code to request resource from the base station.

In one embodiment, the request for resource comprises a request for a common channel.

In one embodiment, the request for resource occurs in the physical layer of the wireless communications network.

In one embodiment, the at least one further function preamble signature associated with a further function of the user equipment comprises a first set of preamble signatures.

In one embodiment, the at least one operational parameter preamble signature associated with a preferred operational parameter of the further function of the user equipment comprises a second set of preamble signatures.

In one embodiment, the first and second sets of preamble signatures are the same.

In one embodiment, the reception logic is operable to receive the indication of a first function scrambling code and indication of at least one further function preamble signature by receiving a system information broadcast message comprising those indicators.

In one embodiment, the user equipment is operating in a CELL_FACH RRC state.

In one embodiment, the first function comprises RACH fallback capability.

In one embodiment, the further function comprises variable transmit time interval capability.

In one embodiment, the preferred operational parameter comprises one of a first or second preconfigured transmit time interval.

Further particular and preferred aspects are set out in the accompanying independent and dependent claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments will now be described further with reference to the accompanying drawings, in which:
Figure 1 illustrates the main component of a telecommunications network according to one embodiment;
Figure 2 is a Venn diagram illustrating capability and preference combinations available to user equipment according to one embodiment;
Figure 3 is a Venn diagram illustrating capability and preference of user equipment according to one embodiment;
Figure 4 illustrates scrambling codes and preamble signatures according to one embodiment; and
Figure 5 illustrates schematically scrambling codes and preamble signatures according to one embodiment.

### DESCRIPTION OF THE EMBODIMENTS

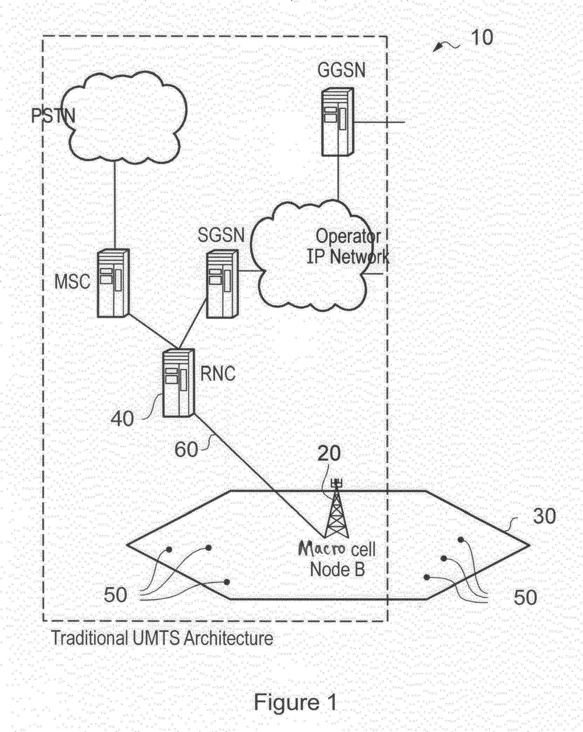

Figure 1 illustrates schematically the main components of a wireless telecommunications system 10 according to one embodiment. User equipment 50 roam through the wireless communications system. Base stations 20 are provided which support areas of radio coverage 30. A number of such base stations 20 are provided and are distributed geographically in order to provide a wide area of coverage to user equipment 50.

When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station 20 and thus effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

User equipment may operate in various modes in, for example, a UMTS telecommunications network. On initial turning on of user equipment in the cell, it will typically operate in "idle mode". Once it synchronises and attaches itself to a base station, it gains radio resource control (RRC) connection and is referred to as being in connected mode. User equipment in idle mode does not have a radio resource control connection. If user equipment is RRC connected it can be in one of five different RRC states: Cell_DCH, Cell_FACH, enhanced Cell_FACH, Cell_PCH, or URA_PCH states.

User equipment typically moves into Cell_DCH state when its data traffic is high. In a Cell_DCH state, the user equipment is allocated a dedicated channel on which to transmit and receive data from a base station. In a network operating according to typical UMTS architecture, user equipment can be in a Cell_DCH state when it is expected to have a high volume of traffic. Operation in a Cell_DCH state is typically highly demanding of battery power. User equipment may be operable, when not in a Cell_DCH state, to use a random access channel (RACH) on the uplink and a base station will operate to communicate with user equipment using a forward access channel (FACH). RACH and FACH have a small data carrying ability and in WCDMA or UMTS systems it is possible for user equipment and base stations to operate and communicate data traffic therebetween using shared or common resources on downlink and uplink when user equipment is operating in a Cell_FACH state.

In the uplink, such data traffic transmission occurs using an enhanced dedicated channel. In the downlink, it is sent on a high speed downlink shared channel. Such channels allow user equipment and base stations to communicate and to transmit longer and larger data packets between themselves for a time without the need for user equipment to upgrade to operating in a Cell_DCH RRC state. Such arrangements allow user equipment to remain in a Cell_FACH state for longer without transitioning to a more dedicated RRC state, thereby allowing a power consumption saving.

It will be appreciated that for data traffic which is particularly bursty in nature, operation in a full Cell_DCH state can be particularly wasteful of battery at user equipment and also of available radio resource. Thus, the ability to handle bursty traffic without entering a more dedicated state is beneficial to overall network operation.

The widespread popularity of "smartphones" in commercial networks has led to a change in typical data traffic profile carried within a network. The loading of Web pages and subsequent user reading, for example, has led to a data traffic profile which has become substantially discontinuous or bursty and traditional communication link establishment techniques and transfer techniques designed primarily for continuous data transmission may not offer a particularly efficient or prompt means to handle bursty traffic.

User equipment operating in a cell supported by a base station compete for common or shared channels. When operating in a Cell_FACH state, user equipment must compete with other user equipment in order to be allocated one of those limited number of shared channels.

Enhanced Cell_FACH has been introduced into UMTS and allows user equipment to receive high speed downlink packet access (HSDPA) packets. As a result, user equipment can receive large bursts of downlink data. High speed uplink packet access (HSUPA) has also been introduced to enhanced Cell_FACH, thereby enabling user equipment to send a large burst of uplink data. The bursty nature of smartphone traffic is suited to the enhanced Cell_FACH RRC state since it uses network resource more efficiently in comparison to use of a dedicated Cell_DCH RRC state. The number of smartphone devices is expected to increase significantly in the future and, thus, it is expected that more user equipment in a network will reside in an enhanced Cell_FACH state.

Some user equipment in a network may be capable of using a RACH (Random Access Channel) for uplink data transmission. That is typically true for user equipment which are not operable to perform HSUPA in an enhanced Cell_FACH state. Some user equipment, having the ability to perform HSUPA in an enhanced Cell_FACH state, may be restricted so that they may only use common E-DCH channels to perform their uplink transmissions when in a non Cell_DCH state. As it is expected in the future for more user equipment to utilise the ability to transmit and receive bursty data using enhanced Cell_FACH, it is likely that the limited number of common E-DCH channels within a network will offer a restriction to network operation and that those shared channels may get congested during busy periods having heavy traffic within the network.

Some user equipment may be operable to operate in an enhanced Cell_FACH manner such that user equipment supporting HSUPA in an enhanced Cell_FACH state may be allowed to fall back to using RACH, for example, if common E-DCH resources are not granted or not available, thereby offering a chance to a base station to free up common E-DCH resources if the network is experiencing data traffic congestion on those resources. This is known as RACH fallback.

Aspects and embodiments described herein recognise that various functionality within a wireless network is being offered to user equipment and base stations operating according to a cell_FACH state. Two possible such features are: RACH fallback and 2/10 ms Transmit Time Interval concurrent deployment.

According to a RACH fallback mechanism, user equipment operating in a cell_FACH state is operable to request a common E-DCH resource. If the cell in which user equipment is operating is congested, a base station will typically be operable to indicate to the user equipment that a common E-DCH resource as requested is not available, but it may fall back to operate on a RACH channel. The base station is operable to indicate that fallback to RACH via a reserved combination of EAI value and signature on the Acquisition Indicator Channel (AICH). As a result, unsuccessful user equipment then tries to re-access the network using a Random Access Channel (RACH).

According to the 2/10 ms Transmit Time Interval (TTI) concurrent deployment functionality, user equipment operating within a network may request a 2 ms TTI common E-DCH resource. If no such resource is available, a base station receiving that request may direct that user equipment to use a 10 ms TTI common E-DCH resource.

In a WCDMA network, there are typically 32 common E-DCH resources. According to the adjustable or variable Transmit Time Interval functionality, each common E-DCH resource is tied to, or associated with, a Transmit Time Interval. For example, resources with index 1 to 20 are typically configured for operation using a 10 ms TTI and the remaining resources with indexes 21 to 32 are typically configured for 2 ms TTI operation. Thus, a base station may indicate to user equipment using an EAI on the Acquisition Indicator Channel (AICH) an index of a channel for user equipment to use and thus implicitly also indicates to user equipment a Transmit Time Interval to use.

It will be appreciated that a base station may not direct user equipment which has requested a 10 ms TTI common channel to a 2 ms TTI common channel. It is assumed that user equipment will only request a 10 ms TTI common channel if it is operating at a cell edge or is unable to support a 2 ms TTI resource.

According to both RACH fallback mechanisms and variable Transmit Time Interval mechanisms, a base station is operable to make a decision regarding the nature of resource allocated to user equipment. The Acquisition Indicator Channel (AICH) is used to indicate a base station's decision either explicitly (for example, in the case of RACH fallback) or implicitly (for example, in the case of variable Transmit Time Interval).

It will be appreciated that since this process occurs in the physical layer (that is to say, on signalling between user equipment and a base station), in order to make a sensible decision and to optimise efficient network operation, a base station needs to obtain information from the user equipment regarding which features that user equipment is able to support.

In the case of variable Transmit Time Intervals, some preamble signatures used by user equipment to access the network are reserved for user equipment which support such functionality. Furthermore, within that set of preamble signatures, some are reserved for user equipment to indicate that it would prefer a 2 ms TTI E-DCH resource, and a further set of preamble signatures is used by user equipment to indicate it wishes to access the network using a 10 ms TTI E-DCH resource.

It will also be appreciated that legacy user equipment may not have variable Transmit Time Interval functionality and may only be configured to use 10 ms Transmit Time Intervals. As a result, a cell supported by a base station is configured to use only 10 ms Transmit Time Intervals for some user equipment, and user equipment which do have variable Transmit Time Interval functionality share the set of preamble signatures allocated to 10 ms Transmit Time Intervals with those legacy user equipment that can only support operation according to that Transmit Time Interval. Thus, a base station is able to recognise user equipment capability at the physical layer as a result of a preamble signature used by user equipment.

Similarly, preamble signatures may be reserved for user equipment which can perform RACH fallback.

Where a combination of functionalities is available to user equipment, for example, user equipment which is capable of performing RACH fallback and also variable Transmit Time Interval operation, a base station may need to identify that functionality together with the Transmit Time Interval preference of user equipment having that functionality. Table 1 sets out the combination of user equipment capability and preference combinations that a base station may need to identify in order to fully interpret information from user equipment to determine user equipment functionality.

**Table 1: Combinations of Indication for UE capability and preference**

| **Combination** | **Supports RACH Fallback** | **Supports 2/10 ms TTI** | |
|---|---|---|---|
| | | **Prefers 10 ms TTI** | **Prefers 2 ms TTI** |
| 1 | No | Yes | No |
| 2 | Yes | No | No |
| 3 | No | No | Yes |
| 4 | Yes | Yes | No |
| 5 | Yes | No | Yes |

It is possible to reserve five sets of preamble signatures in order to cover the five combinations set out in Table 1. However, since are typically only 16 preamble signatures available for common channel (E-DCH) access for user equipment operating in a cell_FACH state, reserving preamble signatures reduces the number of signatures available for each group of user equipment and limiting operation to the five sets is likely to lead to an increase in collisions; that is to say, multiple user equipment using the same preamble signature to try and access a network. Aspects described herein aim to minimise collisions due to user equipment indicating its capability and preference to a base station, thereby allowing information to be gathered by a base station to improve overall efficient network operation.

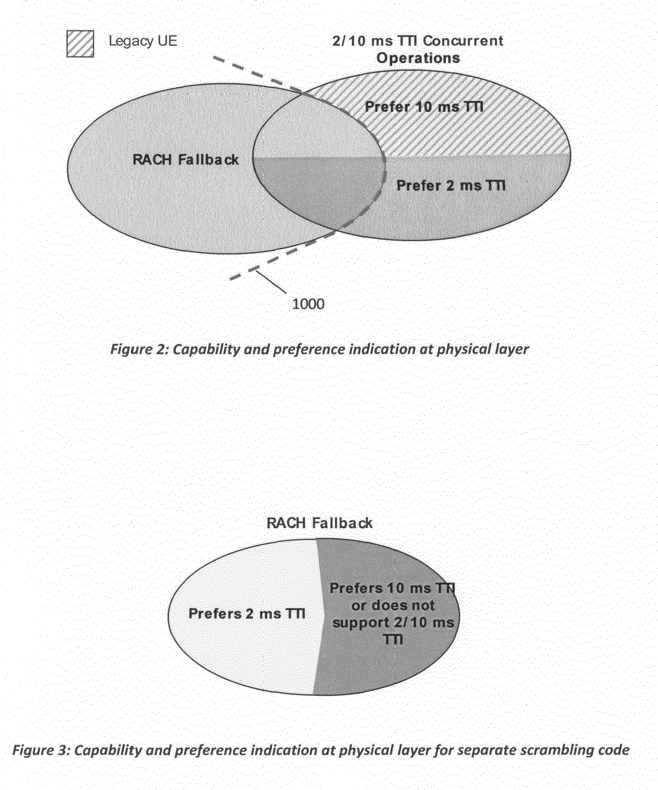

Figure 2 is a Venn diagram illustrating capability and preference combinations of user equipment operable in a network supporting both RACH fallback and variable Transmit Time Interval functions. It can be seen that legacy user equipment will typically prefer 10 ms Transmit Time Intervals, that some user equipment may be able to support both RACH fallback functionality and variable Transmit Time Interval operation, and within the user equipment which is operable to support variable Transmit Time Interval operation it may be necessary to indicate whether a shorter or longer Transmit Time Interval is preferred, in this case 2 ms Transmit Time Intervals or 10 ms Transmit Time Intervals.

Aspects described herein aim to use a separate scrambling code for user equipment which can support RACH fallback. That is to say, a separate scrambling code is used to provide indications to a base station from user equipment of functionality to the left of dashed line 1000 shown in Figure 2. Within that separate scrambling code, preamble signatures used by user equipment may be split into two and one set is used to indicate user equipment Transmit Time Interval preference.

It will be appreciated that in a broad sense such an arrangement allows a scrambling code for each of RACH fallback and variable Transmit Time Interval functionality, and that each scrambling code is able to contain reserved preamble signatures for indicating other functionality available to a base station.

It will be appreciated that in the case of user equipment which does not support variable Transmit Timing Interval functionality but only RACH fallback functionality, a set of preamble signatures used to indicate a 10 ms Transmit Time Interval preference is used, since no 2 ms Transmit Time Interval functionality is available. That is to say, it is imposed that user equipment which does not support variable Transmit Time Interval concurrent operation may only support a longer Transmit Time Interval functionality and only use, for example, a 10 ms Transmit Time Interval E-DCH. Imposition of such a restriction is consistent with a restriction imposed on legacy user equipment which are operating within a cell which supports both 2 ms and 10 ms Transmit Time Interval E-DCH concurrent operation.

Figure 3 shows a Venn diagram of capability and preference user equipment indications for the separate scrambling code allocated to RACH fallback functionality within a cell. It can be seen that within the RACH fallback scrambling code, only two sets of preamble signatures are required, one of which is used to indicate that the user equipment prefers a shorter Transmit Time Interval (in this case, 2 ms), the other of which indicates that the user equipment either prefers a 10 ms Transmit Time Interval or is not capable to support transmissions using both 2 ms or 10 ms Transmit Time Intervals. It will be understood that, according to the embodiment described, the existing scrambling code used for a legacy system may still be used to indicate the capability of performing 2 ms or 10 ms Transmit Time Interval concurrent operation.

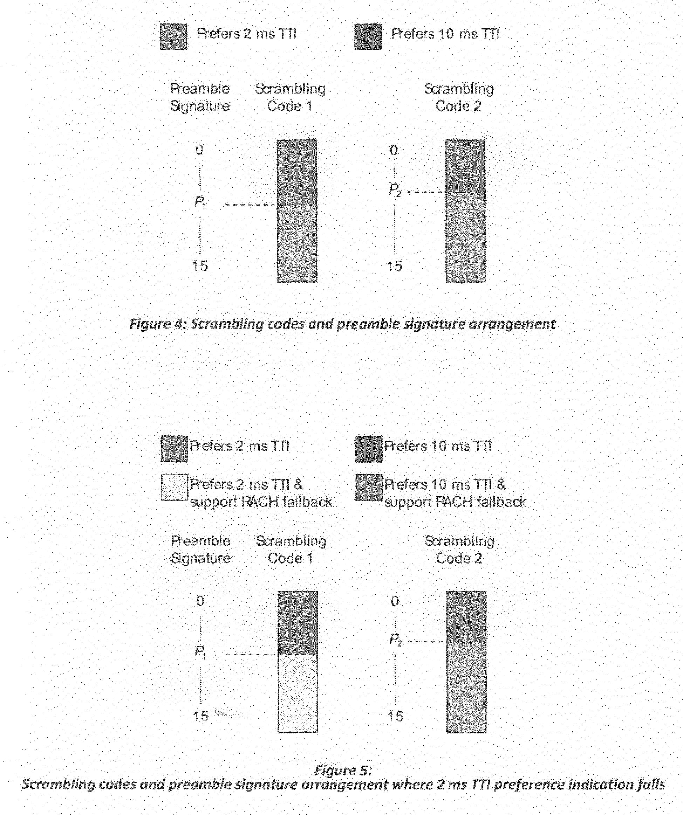

Figure 4 illustrates schematically scrambling codes and preamble signatures according to one embodiment. Scrambling code 1 comprises 16 preamble signatures having indexes 0 to 15 and is used for legacy user equipment and user equipment which supports only 2 ms or 10 ms Transmit Time Interval concurrent deployment. That is to say, scrambling code 1 is used for user equipment which lay on the right-hand side of dashed line 1000 shown in Figure 2. By way of example, according to one embodiment, preamble signatures with indexes 0 to P1 may be used by user equipment to indicate to a network that it prefers to use a 2 ms Transmit Time Interval, thus directly indicating to a network that it supports only a variable Transmit Time Interval sub-feature and not any RACH fallback feature (because it is being transmitted using scrambling code 1 and a preference for a 2 ms Transmit Time Interval is being expressed).

Preamble signatures P1 + 1 to 15 within scrambling code 1 can be used to indicate that user equipment prefers a 10 ms Transmit Time Interval, which indicates either that the user equipment genuinely is operating at a cell edge and requires a 10 ms Transmit Time Interval, or that the user equipment is legacy user equipment.

Scrambling code 2, as shown in Figure 4, comprises 16 preamble signatures. Scrambling code 2 is used for user equipment which supports RACH fallback functionality. That is to say, scrambling code 2 is to be used for user equipment laying on the left of dashed line 1000 shown in Figure 2. In the embodiment illustrated in Figure 4, preamble signatures having indexes 0 to P2 are used to indicate that user equipment supports a RACH fallback and also variable Transmit Time Interval functionality, and, furthermore, that the user equipment in question wishes to use a 2 ms Transmit Time Interval. In the embodiment shown in Figure 4, preamble signatures having indexes P2 + 1 to 15 are used to indicate that the user equipment has RACH fallback functionality, but that the user equipment wishes to use a 10 ms Transmit Time Interval. Choice of those preamble signatures will typically indicate that user equipment is operable to support only RACH fallback functionality.

It will be appreciated that an arrangement in which two scrambling codes are used, as described in relation to Figure 4, may allow a network which does not support RACH fallback but only variable Transmit Time Interval functionality to use a single scrambling code.

According to one embodiment, preamble signatures used to indicate a preference for 2 ms or 10 ms Transmit Time Interval may be the same in both the first and second scrambling codes. That is to say, as shown in Figure 4, P1 = P2. The network indicates preamble signature groupings to user equipment. In some embodiments, the preamble signature grouping is broadcast by the network in a system information broadcast message and, it will be understood, that system information broadcast resources are limited. Thus, in a scenario where P1 = P2, the amount of signalling required by the network in relation to preamble signature grouping is optimised.

Figure 5 illustrates schematically scrambling codes and preamble signatures according to one embodiment. In the embodiment shown in Figure 5, a separate scrambling code is used for user equipment which supports variable Transmit Time Interval functionality to indicate a preference only for a 2 ms Transmit Time Interval. Such an arrangement is shown in relation to scrambling code 1 of the embodiment of Figure 5. Such an arrangement of scrambling codes and preamble signatures allows a network which supports only RACH fallback, but not variable Transmit Time Interval functionality, to use a single scrambling code.

Although embodiments have been described in general in relation to Figures 1 to 5, a particular embodiment will now be described further in detail. According to this embodiment, a base station is operable to support both RACH fallback and variable Transmit Time Interval concurrent deployment functionality in a cell_FACH state. As a result, the network, in this case a base station, broadcasts the following information:
Scrambling Code 1
   ∘ Use for 2/10 ms TTI feature only
   ∘ Preamble signatures 0 to 8 are used to indicate preference for 2 ms TTI
   ∘ Preamble signatures 9 to 15 are used to indicate preference for 10 ms TTI
   ∘ Preamble signatures 9 to 15 are also used for legacy UE
Scrambling Code 2
   ∘ Use for UE that can support RACH Fallback
   ∘ Preamble signatures 0 to 8 are used for UE that also supports 2/10 ms TTI concurrent deployment and has a preference for 2 ms TTI resource
   ∘ Preamble signatures 9 to 15 are used to indicate preference for 10 ms TTI and also UE that does not support 2/10 ms TTI

The following user equipment are located and operating within a cell supported by the base station and wish to access the network. Their capabilities and TTI preferences are listed in Table 2.

**Table 2: UE capabilities and TTI preferences**

| **UE** | **RACH Fallback Support** | **2/10 ms TTI Support** | **TTI Preference** | |
|---|---|---|---|---|
| | | | **10 ms** | **2 ms** |
| 1 | No | No | Yes | No |
| 2 | Yes | No | Yes | No |
| 3 | No | Yes | No | Yes |
| 4 | Yes | Yes | No | Yes |
| 5 | Yes | Yes | Yes | No |

UE1 is a legacy UE and therefore can only access the network using 10 ms TTI E-DCH resource. UE 2 supports only RACH fallback and therefore can only access the network using 10 ms TTI E-DCH resource. UE 3 supports only 2/10 ms TTI. UE4 and UE5 support both RACH fallback and 2/10 ms TTI concurrent operations.

According to this embodiment, the scrambling code and preamble signatures used by these UEs will be chosen by the user equipment as set out in the following table, thus allowing a base station to determine user equipment to determine their functionality from their scrambling code and preamble signature choices.

| UE | Scrambling Code | Valid Signatures | Selected Signature |
|---|---|---|---|
| 1 | 1 | 9 to 15 | 12 |
| 2 | 2 | 9 to 15 | 11 |
| 3 | 1 | 0 to 8 | 4 |
| 4 | 2 | 0 to 8 | 7 |
| 5 | 2 | 9 to 15 | 13 |

Aspects allow management of RACH fallback and variable Transmit Time Interval capability within a network operating in cell_FACH. Aspects do not mandate that user equipment supports both sub-features and do not lead to high collision due to excessive splitting of preamble signatures.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of communicating user equipment capability to a base station in a wireless communications network, said method **characterised by**:
receiving: an indication of a first scrambling code associated with a first function of said user equipment; an indication of at least one first preamble signature associated with a second function of said user equipment; an indication of a second scrambling code associated with the second function of said user equipment; and an indication of at least one second preamble signature associated with a preferred operational parameter of the second function of said user equipment;
determining whether said user equipment has said first function capability, and if so selecting said first scrambling code to request resource from said base station;
assessing whether said user equipment has said second function capability, and if so, selecting said at least one first preamble signature to request resource from said base station;
if it is determined that said user equipment does not have first function capability and assessed that said user equipment does have said second function capability, selecting said second scrambling code to request resource from said base station;
and determining whether said user equipment is operable to support operation according to said preferred operational parameter, and, where an alternative operation is also supported, determining whether the operation is currently the preferred operation, and if so, selecting said at least one second preamble signature to request resource from said base station.

2. A method according to any preceding claim, comprising determining that user equipment does not have first function or second function capability, and preventing selection of said first function scrambling code or said second function scrambling code to request resource from said base station.

3. A method according to any preceding claim, wherein said request for resource comprises a request for a common channel.

4. A method according to any preceding claim, wherein said first preamble signature comprises a first set of preamble signatures.

5. A method according to any preceding claim, wherein said at least one second preamble signature comprises a second set of preamble signatures.

6. A method according to claim 5 as dependent on claim 4, wherein said first and second sets of preamble signatures are the same.

7. A method according to any preceding claim, wherein receiving said indication of a first scrambling code and indication of at least one first preamble signature comprises receiving a system information broadcast message comprising those indicators.

8. A method according to any preceding claim, wherein said user equipment is operating in a CELL_FACH RRC state.

9. A method according to any preceding claim, wherein said first function comprises RACH fallback capability.

10. A method according to any preceding claim, wherein said second function comprises variable transmit time interval capability.

11. A method according to any preceding claim, wherein said preferred operational parameter comprises one of a first or second preconfigured transmit time interval.

12. A method according to any preceding claim, where said preferred operational parameter comprises a 10ms transmit time interval.

13. A computer program product operable, when executed on a computer, to perform the method of any one of claims 1 to 12.

14. User equipment (50) operable to communicate user equipment capability to a base station (20) in a wireless communications network, said user equipment (50) **characterised by**:
reception logic operable to receive: an indication of a first scrambling code associated with a first function of said user equipment; an indication of at least one first preamble signature associated with a second function of said user equipment; an indication of a second scrambling code associated with the second function of said user equipment; and an indication of at least one second preamble signature associated with a preferred operational parameter of the second function of said user equipment;
determination logic operable to determine whether said user equipment has the first function capability;
selection logic operable, if it is so determined, to select said first scrambling code to request resource from said base station; and
assessment logic operable to assess whether said user equipment has second function capability, and if so, said selection logic is further operable to select said at least one first preamble signature to request resource from said base station;
wherein, if it is determined that the user equipment does not have first function capability and assessed that the user equipment does have said second function capability, the selection logic is operable to select the second scrambling code to request resource from the base station; and
wherein the determination logic is operable to determine whether the user equipment is operable to support operation according to the preferred operational parameter, and where an alternative operation is also supported, to determine whether the operation is currently the preferred operation, and if so the selection logic is operable to select the at least one second preamble signature to request resource from the base station.

## Patentansprüche

1. Verfahren zum Kommunizieren einer Benutzergerätefähigkeit zu einer Basisstation in einem Drahtloskommunikationsnetz, wobei das Verfahren **gekennzeichnet ist durch**:
Empfangen: einer Indikation eines ersten Verwürfelungscodes, der mit einer ersten Funktion des Benutzergeräts assoziiert ist; einer Indikation von mindestens einer ersten Präambelsignatur, die mit einer zweiten Funktion des Benutzergeräts assoziiert ist; einer Indikation eines zweiten Verwürfelungscodes, der mit der zweiten Funktion des Benutzergeräts assoziiert ist; und einer Indikation von mindestens einer zweiten Präambelsignatur, die mit einem bevorzugten Betriebsparameter der zweiten Funktion des Benutzergeräts assoziiert ist;
Bestimmen, ob das Benutzergerät die erste Funktionsfähigkeit aufweist, und falls dem so ist, Auswählen des ersten Verwürfelungscodes, um eine Ressource von der Basisstation anzufordern;
Beurteilen, ob das Benutzergerät die zweite Funktionsfähigkeit aufweist, und falls dem so ist, Auswählen der mindestens einen ersten Präambelsignatur, um eine Ressource von der Basisstation anzufordern;
falls bestimmt wird, dass das Benutzergerät nicht die erste Funktionsfähigkeit aufweist, und beurteilt wird, dass das Benutzergerät nicht die zweite Funktionsfähigkeit aufweist, Auswählen des zweiten Verwürfelungscodes, um eine Ressource von der Basisstation anzufordern;
und Bestimmen, ob das Benutzergerät funktionsfähig ist, einen Betrieb gemäß dem bevorzugten Betriebsparameter zu unterstützen, und, wenn ebenso ein alternativer Betrieb unterstützt wird, Bestimmen, ob der Betrieb gegenwärtig der bevorzugte Betrieb ist, und falls dem so ist, Auswählen der mindestens einen zweiten Präambelsignatur, um eine Ressource von der Basisstation anzufordern.

2. Verfahren nach einem vorangegangenen Anspruch, umfassend Bestimmen, dass das Benutzergerät nicht die erste Funktionsfähigkeit oder zweite Funktionsfähigkeit aufweist, und Verhindern der Auswahl des ersten Funktionsverwürfelungscodes oder des zweiten Funktionsverwürfelungscodes, um eine Ressource von der Basisstation anzufordern.

3. Verfahren nach einem vorangegangenen Anspruch, wobei die Anforderung für eine Ressource eine Anforderung für einen gemeinsamen Kanal umfasst.

4. Verfahren nach einem vorangegangenen Anspruch, wobei die erste Präambelsignatur einen ersten Satz von Präambelsignaturen umfasst.

5. Verfahren nach einem vorangegangenen Anspruch, wobei die mindestens eine zweite Präambelsignatur einen zweiten Satz von Präambelsignaturen umfasst.

6. Verfahren nach Anspruch 5, wie von Anspruch 4 abhängig, wobei der erste und zweite Satz von Präambelsignaturen dieselben sind.

7. Verfahren nach einem vorangegangenen Anspruch, wobei das Empfangen der Indikation eines ersten Verwürfelungscodes und einer Indikation von mindestens einer ersten Präambelsignatur ein Empfangen einer Systeminformationen-Broadcast-Nachricht umfasst, die diese Indikatoren umfasst.

8. Verfahren nach einem vorangegangenen Anspruch, wobei das Benutzergerät in einem CELL_FACH-RRC-Zustand arbeitet.

9. Verfahren nach einem vorangegangenen Anspruch, wobei die erste Funktion eine RACH-Fallback-Fähigkeit umfasst.

10. Verfahren nach einem vorangegangenen Anspruch, wobei die zweite Funktion eine variable Sendezeitfähigkeit umfasst.

11. Verfahren nach einem vorangegangenen Anspruch, wobei der bevorzugte Betriebsparameter entweder ein erstes oder zweites vorkonfiguriertes Sendezeitintervall umfasst.

12. Verfahren nach einem vorangegangenen Anspruch, wobei der bevorzugte Betriebsparameter ein Sendezeitintervall von 10 ms umfasst.

13. Computerprogrammprodukt, das bei Ausführung auf einem Computer funktionsfähig ist, das Verfahren nach einem der Ansprüche 1 bis 12 durchzuführen.

14. Benutzergerät (50), das funktionsfähig ist, eine Benutzergerätefähigkeit zu einer Basisstation (20) in einem Drahtloskommunikationsnetz zu kommunizieren, wobei das Benutzergerät (50) **gekennzeichnet ist durch**:
Empfangslogik, die funktionsfähig ist zum Empfangen: einer Indikation eines ersten Verwürfelungscodes, der mit einer ersten Funktion des Benutzergeräts assoziiert ist; einer Indikation von mindestens einer ersten Präambelsignatur, die mit einer zweiten Funktion des Benutzergeräts assoziiert ist; einer Indikation eines zweiten Verwürfelungscodes, der mit der zweiten Funktion des Benutzergeräts assoziiert ist; und einer Indikation von mindestens einer zweiten Präambelsignatur, die mit einem bevorzugten Betriebsparameter der zweiten Funktion des Benutzergeräts assoziiert ist;
Bestimmungslogik, die funktionsfähig ist zum Bestimmen, ob das Benutzergerät die erste Funktionsfähigkeit aufweist;
Auswahllogik, die, falls dies so bestimmt wird, funktionsfähig ist zum Auswählen des ersten Verwürfelungscodes, um eine Ressource von der Basisstation anzufordern; und
Beurteilungslogik, die funktionsfähig ist zum Beurteilen, ob das Benutzergerät die zweite Funktionsfähigkeit aufweist, und falls dem so ist, die Auswahllogik ferner funktionsfähig ist zum Auswählen der mindestens einen ersten Präambelsignatur, um eine Ressource von der Basisstation anzufordern;
wobei, falls bestimmt wird, dass das Benutzergerät nicht die erste Funktionsfähigkeit aufweist, und beurteilt wird, dass das Benutzergerät nicht die zweite Funktionsfähigkeit aufweist, die Auswahllogik funktionsfähig ist zum Auswählen des zweiten Verwürfelungscodes, um eine Ressource von der Basisstation anzufordern; und
wobei die Bestimmungslogik funktionsfähig ist zum Bestimmen, ob das Benutzergerät funktionsfähig ist, einen Betrieb gemäß dem bevorzugten Betriebsparameter zu unterstützen, und, wenn ebenso ein alternativer Betrieb unterstützt wird, zum Bestimmen, ob der Betrieb gegenwärtig der bevorzugte Betrieb ist, und falls dem so ist, die Auswahllogik funktionsfähig ist zum Auswählen der mindestens einen zweiten Präambelsignatur, um eine Ressource von der Basisstation anzufordern.

## Revendications

1. Procédé de communication d'une capacité d'équipement utilisateur à une station de base dans un réseau de communication sans fil, ledit procédé étant **caractérisé par** :
la réception : d'une indication d'un premier code de brouillage associé à une première fonction dudit équipement utilisateur ; d'une indication d'au moins une première signature de préambule associée à une seconde fonction dudit équipement utilisateur ; d'une indication d'un second code de brouillage associé à la seconde fonction dudit équipement utilisateur ; et d'une indication d'au moins une seconde signature de préambule associée à un paramètre fonctionnel préféré de la seconde fonction dudit équipement utilisateur ;
la détermination que ledit équipement utilisateur possède ladite première capacité de fonction et, si tel est le cas, la sélection dudit code de brouillage pour demander des ressources de ladite station de base ;
l'évaluation si ledit équipement utilisateur possède ladite seconde capacité de fonction et, si tel est le cas, la sélection de ladite ou desdites premières signatures de préambule pour demander des ressources de ladite station de base ;
s'il est déterminé que ledit équipement utilisateur ne possède pas la première capacité de fonction et qu'il est évalué que ledit équipement utilisateur ne possède pas ladite seconde capacité de fonction, la sélection dudit second code de brouillage pour demander des ressources de ladite station de base ;
et la détermination que ledit équipement utilisateur permet de prendre en charge une opération en fonction dudit paramètre fonctionnel préféré et, lorsqu'une opération alternative est également prise en charge, la détermination que l'opération est à présent l'opération préférée et, si tel est le cas, la sélection de ladite ou desdites signatures de préambule pour demander des ressources de ladite station de base.

2. Procédé selon l'une quelconque des revendications précédentes, comprenant la détermination que l'équipement utilisateur ne possède pas la première ou la seconde capacité de fonction et l'empêchement d'une sélection dudit premier code de brouillage de fonction ou dudit second code de brouillage de fonction pour demander des ressources de ladite station de base.

3. Procédé selon l'une quelconque des revendications précédentes, dans lequel ladite demande de ressources comprend une demande d'un canal commun.

4. Procédé selon l'une quelconque des revendications précédentes, dans lequel ladite première signature de préambule comprend un premier ensemble de signatures de préambule.

5. Procédé selon l'une quelconque des revendications précédentes, dans lequel ladite ou lesdites secondes signatures de préambule comprennent un second ensemble de signatures de préambule.

6. Procédé selon la revendication 5 dépendante de la revendication 4, dans lequel lesdits premier et second ensembles de signatures de préambule sont les mêmes.

7. Procédé selon l'une quelconque des revendications précédentes, dans lequel la réception de ladite indication d'un premier code de brouillage et l'indication d'au moins une première signature de préambule comprennent la réception d'un message de diffusion d'informations du système comprenant ces indications.

8. Procédé selon l'une quelconque des revendications précédentes, dans lequel ledit équipement utilisateur fonctionne dans un état RRC CELL_FACH.

9. Procédé selon l'une quelconque des revendications précédentes, dans lequel ladite première fonction comprend une capacité de repli de canal RACH.

10. Procédé selon l'une quelconque des revendications précédentes, dans lequel ladite seconde fonction comprend une capacité d'intervalle de temps de transmission variable.

11. Procédé selon l'une quelconque des revendications précédentes, dans lequel ledit paramètre fonctionnel préféré comprend soit un premier, soit un second intervalle de temps de transmission configuré.

12. Procédé selon l'une quelconque des revendications précédentes, dans lequel ledit paramètre fonctionnel préféré comprend un intervalle de temps de transmission de 10 ms.

13. Produit-programme d'ordinateur permettant, lorsqu'il est exécuté sur un ordinateur, de réaliser le procédé selon l'une quelconque des revendications 1 à 12.

14. Équipement utilisateur (50) permettant de communiquer une capacité d'équipement utilisateur à une station de base (20) dans un réseau de communication sans fil, ledit équipement utilisateur (50) étant **caractérisé par** :
une logique de réception permettant de recevoir : une indication d'un premier code de brouillage associé à une première fonction dudit équipement utilisateur ; une indication d'au moins une première signature de préambule associée à une seconde fonction dudit équipement utilisateur ; une indication d'un second code de brouillage associé à la seconde fonction dudit équipement utilisateur ; et une indication d'au moins une seconde signature de préambule associée à un paramètre fonctionnel préféré de la seconde fonction dudit équipement utilisateur ;
une logique de détermination permettant de déterminer si ledit équipement utilisateur possède la première capacité de fonction ;
une logique de sélection permettant, si c'est ainsi déterminé, de sélectionner ledit premier code de brouillage pour demander des ressources de ladite station de base ; et
une logique d'évaluation permettant d'évaluer si ledit équipement utilisateur possède une seconde capacité de fonction et, si tel est le cas, ladite logique de sélection permet en outre de sélectionner ladite ou lesdites premières signatures de préambule pour demander des ressources de ladite station de base ;
dans lequel, s'il est déterminé que ledit équipement utilisateur ne possède pas la première capacité de fonction et s'il est évalué que l'équipement utilisateur possède ladite seconde capacité de fonction, la logique de sélection permet de sélectionner le second code de brouillage pour demander des ressources de ladite station de base ; et
dans lequel la logique de détermination permet de déterminer si l'équipement utilisateur permet de prendre en charge une opération en fonction dudit paramètre fonctionnel préféré et, lorsqu'une opération alternative est également prise en charge, pour déterminer si l'opération est à présent l'opération préférée et, si tel est le cas, la logique de sélection permet de sélectionner ladite ou lesdites signatures de préambule pour demander des ressources de ladite station de base.
